Europäisches Patentamt

(19) European Patent Office

Office européen des brevets

(11) Veröffentlichungsnummer: **0 044 806**

**A1**

(12) # EUROPÄISCHE PATENTANMELDUNG

(21) Anmeldenummer: **81810275.8**

(22) Anmeldetag: **08.07.81**

(51) Int. Cl.³: **G 01 N 27/12**

(30) Priorität: **23.07.80 CH 5607/80**

(43) Veröffentlichungstag der Anmeldung:
**27.01.82 Patentblatt 82/4**

(84) Benannte Vertragsstaaten:
**AT BE CH DE FR GB IT LI LU NL SE**

(71) Anmelder: **Thalmond-Anstalt**
**Gempa-Haus Birkenweg 6**
**FL-9490 Vaduz(LI)**

(72) Erfinder: **Gröninger, Kurd G., Dr.**
**Büelstrasse 556**
**CH-5426 Lengnau(CH)**

(74) Vertreter: **Frauenknecht, Alois J.**
**c/o PPS Polyvalent Patent Service AG Fohrhölzlistrasse**
**19**
**CH-5443 Niederrohrdorf(CH)**

(54) **Feuchtefühler.**

(57) Ein Feuchtefühler für ein elektrisches Feuchtemessgerät mit zwei Elektroden (1 bis 5), weist einen anorganischen wassersorbierenden und wasserabgebenden Elektrolyten (11) auf. Die Anionen des Elektrolyten (11) bilden eine tragende kristalline, von Hohlräumen und Kanälen durchsetzte, poröse Struktur. Die Kationen befinden sich mindestens teilweise an den Porenwänden. Durch in die Hohlräume und Kanäle eintretendes Wasser erfolgt keine Aenderung der kristallinen Anionenstruktur; die Beweglichkeit der Anionen wird ohne störende Quellung erreicht. Der Feuchtefühler ist zur reproduzierbaren Messung von relativen Feuchten vom wenigen ppm bis 100 % geeignet.

Fig.1

EP 0 044 806 A1

## Feuchtefühler

Die vorliegende Erfindung bezieht sich auf einen Feuchtefühler für ein elektrisches Feuchtemessgerät, mit zwei Elektroden, die durch einen anorganischen wassersorbierenden und
wasserabgebenden, bei einer Beinhaltung von Wasser entstehenden Elektrolyten mit Anionen und Kationen, elektrisch leitend
verbunden sind.

Bei einem bekannten Feuchtefühler (CH-PS 382 465) sind einerseits die Elektroden fest mit einer starren Elektrolytträgerplatte verbunden, an der ein flüssiger Elektrolyt in stabförmiger Erstreckung durch Adhäsionskräfte gehalten ist. Änderungen des Wassergehaltes in der Umgebungsatmosphäre bewirken
Änderungen der Impedanz des Elektrolyten. Diese Impedanzänderungen werden in einer Messchaltung festgestellt und die jeweilige Impedanz als relativer Feuchtewert angezeigt.

Diesem Feuchtefühler haften mehrere Nachteile an. Erstens ist
jener Oberflächenanteil des Elektrolyten, der mit der Messsondenatmosphäre in Verbindung steht, gering, weshalb der
Wasseraustausch zwischen dem Elektrolyten einerseits und der
Umgebung anderseits relativ langsam erfolgt. Dadurch erfolgt
die Gleichgewichtseinstellung mit zeitlicher Verzögerung, was
unerwünscht ist. Weiter ist der Träger der Elektroden und des
Elektrolyten ein elektrischer Isolator und damit auch ein
schlechter Wärmeleiter. Wegen seiner im Vergleich zu den Abmessungen des Elektrolyten grossen Dimensionierung passt er
sich nur langsam Änderungen der Umgebungstemperatur an. Den
Veränderungen der Umgebungstemperatur folgt auch der Elektrolyt daher nur mit einer grossen zeitlichen Verzögerung, so
dass solche Temperaturänderungen zu Messfehlern führen können. Weiter wird die Viskosität des Elektrolyten bei hoher
Umgebungsfeuchte gering und es herrscht die Gefahr, dass er
vom Elektrolytträger wegfliesst.

Im weiteren ist auch ein Feuchtefühler mit Feststoffelektrolyten bekannt (DE-OS 2 154 391), der im wesentlichen aus einem Halbleitermaterial und stark hygroskopischen Stoffen besteht und durch einen Sinterprozess hergestellt wird. Bei diesem Feuchtefühler ist die Herstellbarkeit relativ leicht. Sein Messbereich ist ausreichend und die Reproduzierbarkeit der Messwerte ist gut. Weiter ist es möglich, mit diesem Feuchtefühler die Feuchtigkeit von Feststoffen zu erfassen. Er hat indessen den Nachteil einer grossen Hysterese. Durch fremde Ionen oder polare Moleküle kann er inaktiviert und dann nicht ohne weiteres regeneriert werden. Bei hohen relativen Feuchten bildet sich freies Wasser, wodurch das Messergebnis verfälscht wird. Ein weiterer Nachteil liegt in einem die Messergebnisse verändernden Alterungsprozess des Materials.

Die vorliegende Erfindung stellt sich die Aufgabe, einen Feuchtefühler zu schaffen, der eine für die Messung unbedeutende Hysterese aufweist, alterungsbeständig ist und, wenn durch Ionen oder polare Moleküle inaktiviert, leicht regeneriert werden kann und bis zur Sättigung (RF = 100%) genaue Messwerte liefert.

Erfindungsgemäss wird diese Aufgabe durch einen Elektrolyten gelöst, der eine kristalline, von Hohlräumen und Kanälen durchsetzte, poröse Struktur aufweist.

Im erfindungsgemässen Elektrolyten sitzen die Kationen mindestens teilweise an den Porenwänden, welche durch in die Hohlräume und Kanäle eintretendes Wasser ohne Änderung der kristallinen Anionenstruktur und insbesondere ohne Quellung beweglich werden.

Durch die Erfindung können die heute in grosser Zahl bekannten Zeolithe als Elektrolyt verwendet werden. Der Elektrolyt verhält sich in relativen Feuchtebereichen von wenigen ppm bis 100%, d.h., auch bei seiner Sättigung mit Wasser als Festkörper, weshalb für ihn jede beliebige Form gewählt werden kann. Je nach Anwendungsfall und dadurch bestimmter Ausführungsform des Feuchtefühlers kann auf eine Trägervorrichtung vollständig verzichtet werden. In jedem Fall der Verwendung eines Trägers kann dieser dünn und flexibel, d.h., massearm ausgebildet sein, wodurch Umgebungstemperaturänderungen das Messergebnis kaum noch beeinflussen.

Ein weiterer Vorteil bei der Verwendung der Zeolithe als Elektrolyt liegt darin, dass dieser nach einer Inaktivierung durch unerwünschte Gase durch blosses Erhitzen regeneriert werden kann.

Eine Schicht des Elektrolyten kann leicht derart ausgebildet werden, dass die Empfindlichkeit gegen mechanische Stösse gering und gegenüber bekannter Elektrolyte besser ist. Ein weiterer Vorteil der Erfindung besteht darin, dass durch eine mechanische Veränderung der Form und des Volumens des Elektrolyten seine Widerstandscharakteristik verändert werden kann, wodurch die Wahl der Widerstandscharakteristik bei Bedarf direkt am Sensor anstatt an der nachgeordneten Schaltung vorgenommen werden kann.

Zusätzliche Vorteile zeigen sich in der leichten Herstellbarkeit eines Feuchtefühlers mit Zeolithen. Weiter werden keine irreversiblen Veränderungen nach einer Vakuumexposition festgestellt. Ein weiterer Vorteil besteht darin, dass die sog. Temperaturdrift gegenüber bekannten Feuchtesensoren in weiten Bereichen nur von der Temperatur allein und nicht zusätzlich von der Umgebungsfeuchte abhängt, was eine schaltungsmässige Temperaturkompensation der Widerstandscharakteristik erleichtert.

Nach einer bevorzugten Ausführungsform sind die Kationen des Elektrolyten durch Elemente der Alkali- und/oder Erdalkaligruppe gebildet, wobei vorzugsweise Lithium- oder Kalziumionen verwendet werden. Diese Ionen bewirken wegen ihrer hohen Hydratationszahl den Vorteil einer grossen Empfindlichkeit der Beweglichkeit bei Feuchteänderungen.

Nach einer bevorzugten Ausführungsform wird als Elektrolyt ein Zeolith mit Faujasitstruktur oder mit Linde A-Struktur verwendet. Solche Elektrolyten haben ein dreidimensionales Netzwerk mit offener Struktur. Dies bewirkt den Vorteil eines raschen Ansprechens des Feuchtefühlers auf Änderungen der Umgebungsfeuchte. Weiter können als Elektrolyt mit geringerer Ansprechempfindlichkeit auch andere Zeolithe oder Pentasile verwendet werden.

Anhand der beiliegenden schematischen Zeichnungen wird die Erfindung beispielsweise erläutert. Es zeigen:

Fig. 1   einen Querschnitt durch ein erstes Ausführungsbeispiel eines Feuchtefühlers,

Fig. 2   eine Draufsicht in Richtung des Pfeiles II in Fig. 1,

Fig. 3   eine Ansicht des Beispiels nach Fig. 1 von unten in Richtung des Pfeiles III,

Fig. 4   eine Draufsicht auf ein zweites Ausführungsbeispiel eines Feuchtefühlers,

Fig. 5   einen Schnitt längs der Linie V - V in Fig. 4 und

Fig. 6   Messdiagramme verschiedener Feuchtefühler.

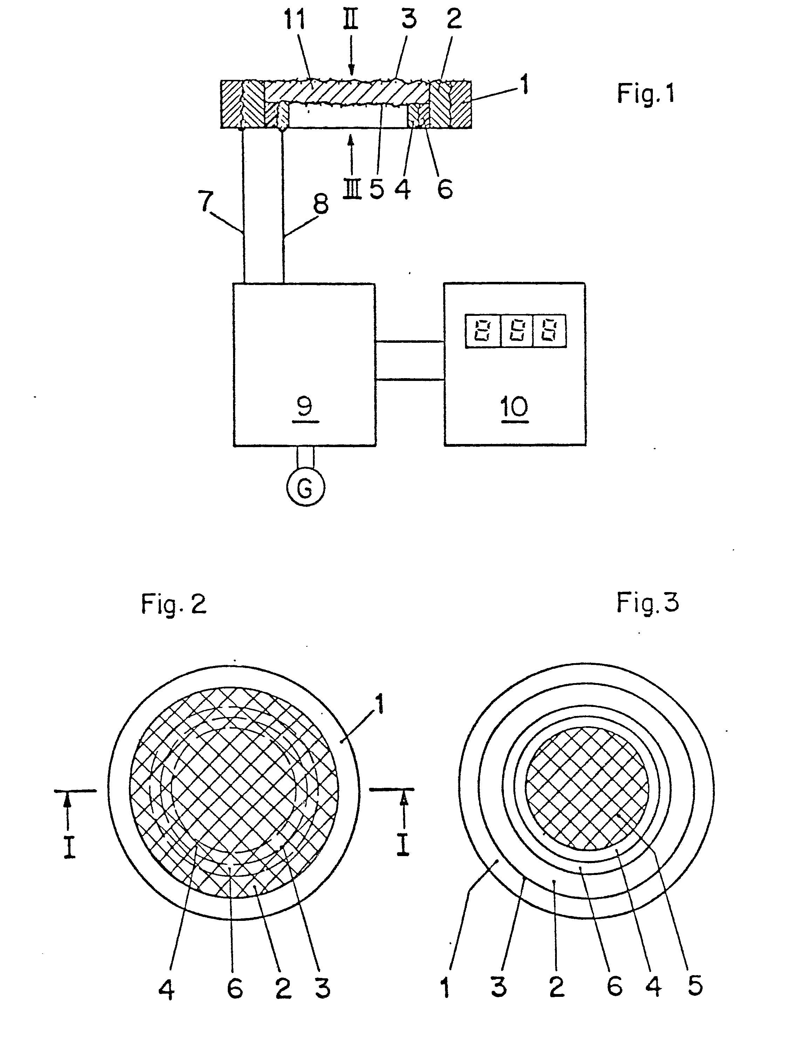

Beim Ausführungsbeispiel nach Fig. 1 weist der Feuchtefühler einen äusseren Ring 1 auf, in den konzentrisch ein Ring 2 eingeschoben ist. Zwischen den Ringen 1 und 2 ist mit Presssitz der Rand eines Drahtgitters 3 festgeklemmt. Ein innerer Ring 4 ist von einem zweiten Drahtgitter 5 überspannt, dessen Rand an der Aussenseite des Innenringes 4 heruntergezogen ist. Zwischen dem heruntergezogenen Drahtgitterrand und dem Ring 2 ist ein Isolierring 6 angebracht, der aus einer giessbaren Kunstharzmasse besteht und den Innenring 4 mit dem Drahtgitter 5 einerseits und mit dem Ring 2 anderseits fest verbindet. Die Ringe 1, 2 und das Drahtgitter 3 einerseits und der Innenring 4 mit dem Drahtgitter 5 anderseits sind aus einem korrosionsbeständigen, elektrisch leitenden Material und bilden je eine Elektrode, welche über Leitungen 7, 8 an eine von einer Stromquelle G gespeiste Auswerteschaltung 9 angeschlossen sind. Der Auswerteschaltung 9 ist eine Anzeige 10 (analog oder digital) zugeordnet, welche den gemessenen Widerstand zwischen den Elektroden als relative Feuchte in Prozenten anzeigt. Diese Auswerteschaltung 19 ist an sich bekannt und wird daher hier nicht näher erläutert. In dem durch die Drahtgitter 3 und 5 sowie dem Isolierring 6 und dem Innenring 2 begrenzten Hohlraum ist ein Elektrolyt 11 angeordnet. Der Elektrolyt besteht aus einem pulverförmigen zu einer Tablette gepressten Zeolithen, der mit den die Elektrode bildenden Teilen in Berührung steht. Zeolithe sind an sich bekannte natürliche oder synthetische, kristalline Gebilde hydratisierter Aluminosilikate mit Elementen der I. und II.-Gruppe des periodischen Systems. Ihre Struktur ist ein unendliches, dreidimensionales Gitter aus $AlO_4$ und $SiO_4$ Tetraedern, denen die Sauerstoffgitterplätze gemeinsam sind. Die Zeolithe sind von einer Vielzahl von wasseraufnehmenden Kanälen durchsetzt an deren Wänden, bei Abwesenheit von Wasser, die Kationen angelagert sind, die, in Gegenwart von Wasser beweglich werden und in Abhängigkeit der vorhandenen Wassermenge die Leitfähigkeit der Zeolithe bestimmen.

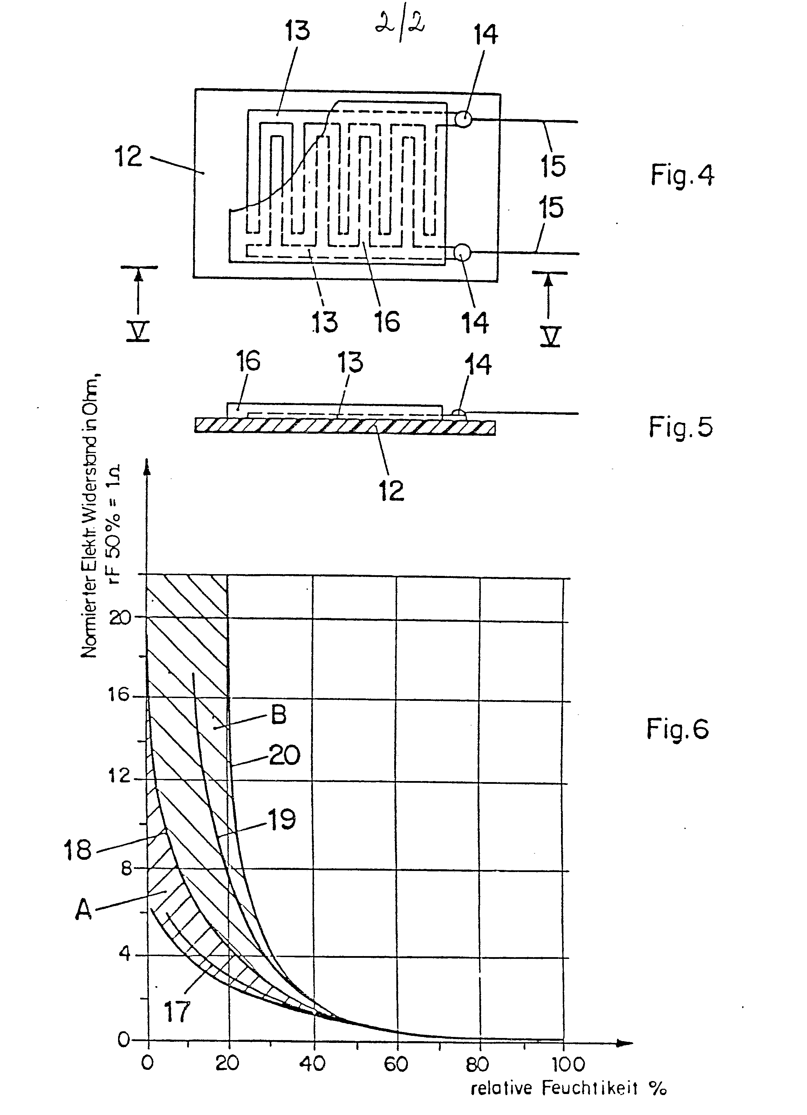

Der Feuchtefühler nach den Fig. 4 und 5 weist einen folienartigen Elektrolytträger 12 aus einem notorisch bekannten elektrisch isolierenden Material auf. Auf dieses sind die die Elektroden bildenden elektrischen Leiter 13 galvanisch aufgetragen. Die beiden Leiter 13 sind kammartig ausgebildet und mit gleichmässigem gegenseitigem Abstand ineinander verzahnt. An ihren Enden sind mittels Lötstellen 14 die zur Auswerteschaltung 9 führenden Leiter 15 angeschlossen. Die Leiter 13 sind durch eine Elektrolytschicht 16 miteinander verbunden. Die Elektrolytschicht 16 besteht aus Zeolithpulver, welches mit 5 bis 20 Gew.- % Zement unter Zugabe von Wasser zu einem Brei vermischt und dann auf die Folie 12 aufgetragen wurde. Nach dem Auftragen der Schicht und nach dem Abbinden des Zementes haftet die Elektrolytschicht 14 an der Folie 12 auch dann, wenn die letztere gebogen wird. Werden Teile der Elektrolytschicht 16, wie in Fig. 4 oben links angedeutet, nachträglich weggekratzt, so ändert sich ihre Widerstandscharakteristik. Auf diese Weise kann im Bedarfsfall die Widerstandscharakteristik des Elektrolyten am Feuchtefühler selbst anstatt in der Auswerteschaltung verändert werden.

Fig. 6 zeigt die mit den Feuchtefühlern nach Fig. 1 bis 5 mit Zeolithen als Elektrolyten gemessen elektrischen Widerstandswerte in Abhängigkeit der relativen Feuchte der Umgebungsatmosphäre. In der Auswerteschaltung wurde der elektrische Widerstand des Elektrolyten derart korrigiert, dass sich für jede Kurve bei einer relativen Feuchte von 50% ein Widerstand von 1 Ohm ergäbe. Der Kurvenbereich A wurde mit dem Feuchtefühler gemäss Fig. 1 bis 3 und der Kurvenbereich B mit einem Feuchtefühler gemäss Fig. 4 und 5 gemessen. Für beide Bereiche A und B sind als Elektrolyt Zeolithe mit Faujasitstruktur, mit Strukturen des Linde A, des Linde X und des Linde Y, Zeolith L, der Chabasitgruppe, Erionit, Mordenit und die Pentasile geeignet. Die den Ladungstransport im Elektrolyten bewirkenden Kationen gehören zur Gruppe der Alkalien und Erdalkalien. Ebenso geeignet sind Hydroniumionen, die über den H-Formen bzw. Seltenerdformen als Ladungsträger wirken können.

Der Funktionsverlauf 17, Fig. 6, resultiert von einem Feuchtefühler mit einem Elektrolyt aus Zeolith mit Faujasit-Struktur und Natriumionen. Bei den Feuchtefühlern mit den Funktionsverläufen 18 bis 20 wurde als Elektrolyt Zeolith mit Faujasit Linde Y-Struktur mit Hydroniumionen bzw. Faujasit Linde A mit Lithiumionen bzw. Faujasit mit Lanthanionen verwendet. Beim Ermitteln der erwähnten Kurven wurde praktisch keine Hysterese festgestellt, insbesondere, wenn Hydroniumionen oder Elemente der Alkali- oder Erdalkaligruppen als Ladungsträger im Elektrolyten dienten.

Inaktivierte Feuchtefühler lassen sich leicht durch Erhitzen regenerieren.

P a t e n t a n s p r ü c h e

1. Feuchtefühler für ein elektrisches Feuchtemessgerät, mit zwei Elektroden, die durch einen anorganischen wassersorbierenden und wasserabgebenden, bei einer Beinhaltung von Wasser entstehenden Elektrolyten mit Anionen und Kationen, elektrisch leitend verbunden sind, dadurch gekennzeichnet, dass der Elektrolyt eine kristalline, von Hohlräumen und Kanälen durchsetzte, poröse Struktur aufweist.

2. Feuchtefühler nach Anspruch 1, dadurch gekennzeichnet, dass der Elektrolyt eine feste Anionenstruktur aufweist.

3. Feuchtefühler nach Anspruch 2, dadurch gekennzeichnet, dass die Anionenstruktur durch ein Zeolith gebildet ist.

4. Feuchtefühler nach Anspruch 3, dadurch gekennzeichnet, dass das Zeolith eine Faujasitstruktur aufweist.

5. Feuchtefühler nach Anspruch 3, dadurch gekennzeichnet, dass das Zeolith eine Linde A-Struktur aufweist.

6. Feuchtefühler nach Anspruch 2, dadurch gekennzeichnet, dass die Anionenstruktur durch ein Pentasil gebildet ist.

7. Feuchtefühler nach Anspruch 1, daduch gekennzeichnet, dass die Kationen des Elektrolyten durch Elemente der Alkali und/oder Erdalkaligruppe und/oder seltene Erden gebildet sind.

8. Feuchtefühler nach Anspruch 2, dadurch gekennzeichnet, dass die Kationen des Elektrolyten Lithiumionen sind.

9. Feuchtefühler nach Anspruch 1, dadurch gekennzeichnet, dass der Elektrolyt pulverförmig, mit 5 bis 20 Gew.% eines Bindemittels vermengt und flächig an einem elektrisch isolierenden Körper angebracht ist.

10. Feuchtefühler nach Anspruch 9, dadurch gekennzeichnet, dass der isolierende Körper ein Flächengebilde ist.

11. Feuchtefühler nach Anspruch 9, dadurch gekennzeichnet, dass das Bindemittel Zement ist.

12. Feuchtefühler nach einem der vorangehenden Ansprüche, dadurch gekennzeichnet, dass der Elektrolyt zwischen zwei Sieben aus elektrisch leitendem Material angeordnet ist.

0044806

Fig. 1

Fig. 2

Fig. 3

Fig.4

Fig.5

Fig.6

Normierter Elektr. Widerstand in Ohm, rF 50% = 1Ω

relative Feuchtikeit %

**0044806**
Nummer der Anmeldung

EP 81 81 0275

Europäisches
Patentamt

# EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | G 01 N 27/12 |
| | US - A - 3 186 225 (D.C. FREEMAN) <br> * Spalten 1-5 * <br><br> --- | 1-5,9 | |
| | US - A - 2 876 321 (E.J. AMOUR) <br> * Spalten 1 und 2 * <br><br> --- | 1,7,8 | |
| A | DE - A - 2 331 654 (THUNDER SCIENTIFIC CORP.) <br> * Patentanspruch 1 * <br><br> --- | 1 | |
| | | | **RECHERCHIERTE SACHGEBIETE** (Int. Cl.³) |
| A | US - A - 3 721 631 (K. SUMI) <br> * Spalte 1, ansprüche * <br><br> --- | 1 | G 01 N 27/12 |
| A | US - A - 4 203 087 (M.G. KOVAC) <br> * Patentansprüche * <br><br> --- | 1 | |
| A | GB - A - 1 493 740 (MATSUSHITA ELECTRIC INDUSTRIAL) <br> * Spalte 1, Zeilen 1-37 * <br><br> ---------- | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Grunden angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23.10.1981 | CALLEWAERT-HAEZ |

EPA form 1503.1 06.78